Europäisches Patentamt

European Patent Office

Office européen des brevets

(19)

(11) Numéro de publication : **0 360 711 B1**

(12)

# FASCICULE DE BREVET EUROPEEN

(45) Date de publication du fascicule du brevet :
01.04.92 Bulletin 92/14

(51) Int. Cl.$^5$ : **F16L 37/00**

(21) Numéro de dépôt : **89420355.3**

(22) Date de dépôt : **20.09.89**

(54) **Dispositif pour l'accouplement des platines porte-éléments des raccords multiples.**

(30) Priorité : **21.09.88 FR 8812557**

(43) Date de publication de la demande :
**28.03.90 Bulletin 90/13**

(45) Mention de la délivrance du brevet :
**01.04.92 Bulletin 92/14**

(84) Etats contractants désignés :
**AT BE CH DE ES FR GB IT LI**

(56) Documents cités :
**FR-A- 861 810
US-A- 4 411 317**

(73) Titulaire : **S.A. DES ETABLISSEMENTS
STAUBLI (France)
B.P. 20 183 Rue des Usines
F-74210 Faverges (FR)**

(72) Inventeur : **Truchet, Gaston
4 Impasse des Mésanges
F-74210 Faverges (FR)**

(74) Mandataire : **Monnier, Guy et al
Cabinet Monnier 150 Cours Lafayette B.P.
3058
F-69393 Lyon Cédex 03 (FR)**

EP 0 360 711 B1

## Description

La présente invention a trait aux raccords multiples utilisés pour la jonction amovible simultanée d'une série de canalisations ou circuits ménagés dans deux pièces prévues démontables.

On sait que les raccords de ce type comprennent généralement deux platines respectivement fixées sur l'une et l'autre des deux pièces démontables, chacune desdites platines formant support pour une série d'éléments de raccordement aptes à coopérer avec des éléments conjugués portés par l'autre platine. Les éléments de l'une ou l'autre des deux platines comportent le plus souvent des clapets ou contact associés à des moyens élastiques qui exercent un effort résistant non négligeable lors de l'emmanchement des éléments conjugués et qui tendent fréquemment à susciter le dégagement de ceux-ci par effet de répulsion. Il est donc nécessaire d'associer aux deux platines un dispositif d'accouplement agencé de manière à opérer d'une part le rapprochement à force desdites platines lors de l'emmanchement des éléments conjugués qu'elles supportent, d'autre part la retenue desdites platines à la position accouplée à l'encontre de l'effort de répulsion.

Les dispositifs d'accouplement connus sont généralement de construction complexe et peu fiable. De plus, ils nécessitent le plus souvent de l'énergie pour assurer la retenue des platines à la position accouplée, si bien qu'en cas de panne imprévue dans la fourniture de cette énergie, les deux platines peuvent se dissocier en provoquant l'échappement ou écoulement dans l'atmosphère du fluide véhiculé par les canalisations raccordées. On notera encore que les dispositifs connus présentent fréquemment un encombrement relativement important qui gêne leur implantation sur les pièces à assembler qui portent les platines du raccord.

C'est à ces inconvénients qu'entend principalement remédier la présente invention, laquelle a pour objet le dispositif d'accouplement qui est défini à la revendication 1.

Il convient ici d'observer que le préambule de cette revendication 1 correspond à la technique révélée par le document FR-A-861810 qui montre un dispositif d'accouplement rapide pour tuyauteries comprenant deux plateaux équipés d'autant de raccords mâles et femelles qu'il y a de tuyaux à raccorder. Ces plateaux sont pourvus d'organes filetés constitués l'un par un orifice, l'autre par une vis associée à un écrou dont la rotation provoque le rapprochement réciproque desdits plateaux ; un système de repérage est prévu de façon à ce que les raccords mâles et femelles portés par les plateaux viennent s'emmancher les uns dans les autres au cours du rapprochement précité.

Le dessin annexé, donné à titre d'exemple, permettra de mieux comprendre l'invention, les caractéristiques qu'elle présente et les avantages qu'elle est susceptible de procurer.

Fig. 1 est une coupe axiale montant l'agencement général d'un dispositif d'accouplement établi conformément à l'invention, les platines du raccord multiple étant supposées à la position désaccouplée.

Fig. 2 reproduit fig. 1 à la position accouplée des deux platines.

Fig. 3 illustre schématiquement une variante de mise en oeuvre de l'invention.

Sur ce dessin, on a supposé que le raccord multiple doté du dispositif d'accouplement suivant l'invention était destiné à assurer la jonction des canalisations et circuits de deux pièces référencées 1 et 2, la pièce 1 pouvant être considérée comme la pièce principale fixe contre laquelle vient se fixer de manière démontable la pièce amovible 2. Comme à l'accoutumée, le raccord multiple envisagé comprend deux platines 3 et 4 rendues respectivement solidaires des pièces 1 et 2, la platine 3 supportant les éléments mâles 5 destinés à s'emmancher à l'intérieur des éléments femelles 6 qui équipent la platine 4.

Conformément à l'invention, cette platine 4 est rigidement solidaire de la pièce amovible 2 alors que la platine 3 est portée par une bague mobile 7 qui est traversée axialement par une tige 8. On observera que cette tige 8 présente un épaulement annulaire 8a de part et d'autre duquel sont montés deux roulements 9 qui permettent à ladite tige de tourner librement sur elle-même tout en restant axialement solidaire de la bague 7.

L'une des extrémités de la tige 8 (celle tournée vers la gauche sur le dessin) comporte une partie filetée 8b tandis que l'extrémité opposée est creusée d'une chambre axiale borgne 8c qui en section présente un profil carré afin d'accueillir un embout 10a à même section prévu à l'extémité d'un arbre tournant 10 prolongeant axialement la tige 8. En arrière de l'embout 10a, cet arbre 10 comporte une partie filetée 10b qui est destinée à coopérer avec un taraudage 11a ménagé horizontalement dans un bâti fixe 11 rigidement solidaire de la pièce principale 1.

A l'opposé de l'embout 10a, l'arbre 10 est conformé de façon à être soutenu en porte-à-faux par un châssis 12 dont il est rendu axialement solidaire. Ce châssis 12 forme support pour un moteur 13 à vitesse lente (moteur hydraulique ou moto-réducteur électrique) dont l'arbre de sortie 14 pénètre à l'intérieur d'une chambre axiale de l'arbre 10 auquel il est lié par clavetage.

Le bâti fixe 11 est traversé à coulissement par des guides horizontaux 15, au nombre de trois dans l'exemple de réalisation envisagé. L'une des extrémités de ces guides 15 est rendue solidaire du châssis 12 qu'elles supportent, tandis que dans l'extrémité opposée de chacune d'elles est fixée axialement une vis 16 dont la tête 16a prend appui contre une oreille de la bague 7. Entre cette dernière et le fond d'une chambre axiale de chaque guide 15 est prévu un ressort 17 engagé autour de la vis 16 correspondante.

À l'organe fileté formé par la tige 8 et sa partie 8a et ainsi rendu axialement solidaire de la platine 3, correspond sur la platine 4 un organe fileté conjugué constitué par un écrou 18. Cet écrou 18 est retenu axialement et angulairement à l'intérieur d'une cage formée par une chapeau 19 assemblé à un disque 20 à l'aide de boulons 21 qui traversent la platine 4. On observera que l'écrou 18 et la cage 19-20 sont avantageusement conformés pour laisser audit écrou une légère liberté d'orientation angulaire.

Le fonctionnement du dispositif d'accouplement découle des explications qui précèdent et se comprend aisément.

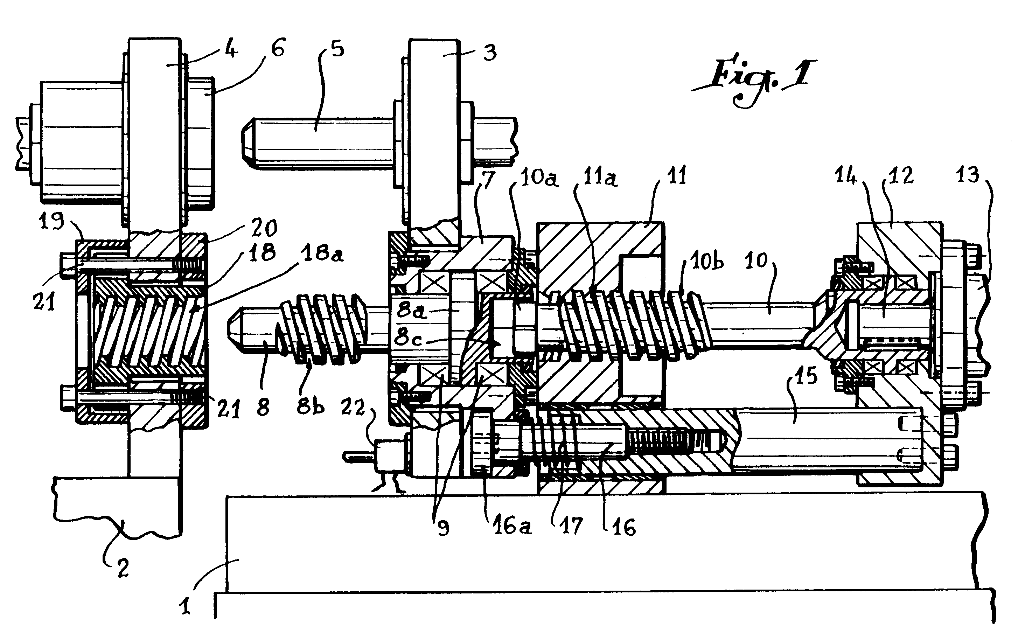

Lorsque la pièce 2 a été assemblée à la pièce 1, l'ensemble mobile 7-12-15 du dispositif a été préalablement amené à la position reculée suivant fig. 1. Dans ces conditions, pour opérer l'accouplement des deux platines 3 et 4, il suffit d'alimenter le moteur 13 ; la rotation de l'arbre 10 assure le vissage de la partie filetée 10b dans le taraudage 11a du bâti fixe 11, et de ce fait provoque l'avance axiale de l'ensemble 7-12-15 sus-mentionné. La platine 3 se rapproche ainsi de la platine 4, les éléments mâles 5 commençant à s'engager dans les éléments femelles 6 en créant dès lors la force de répulsion.

À un moment donné de cette course, l'embout fileté 8b vient s'appliquer contre le débouché du taraudage 18a de l'écrou 18. Si les filetages ne se trouvent pas à une position angulaire réciproque qui autorise leur engagement immédiat, la bague 7 cesse momentanément son avance moyennant coulissement des têtes 16a des vis 16 et compression des ressorts 17 ; l'arbre 10 poursuit sa rotation et son avance axiale alors que la tige 8 continue de tourner sans se déplacer axialement par suite du jeu dont dispose l'embout 10a à l'intérieur de la chambre 8c. Dès que les filets se trouvent en coïncidence, le filetage 8b engrène avec le taraudage 18a, les pièces 3 (platine), 7 (bague), 10 (arbre), 15 (guides), 12 (châssis) et 13 (moteur) se déplaçant à la même vitesse et la partie filetée 10b engrenant avec le taraudage 11a.

Aussitôt que cette partie filetée 10b a libéré le taraudage 11a, les ressorts 17 assurent le retour élastique de l'ensemble mobile 10-15-12-13. On notera que la libération sus-mentionnée permet la neutralisation de l'effort de répulsion exercé par le bâti 11 sur la platine 4.

Les ressorts 17 assurent le retour élastique à la position normale et permettent de ce fait le vissage de l'embout 8b dans l'écrou 18.

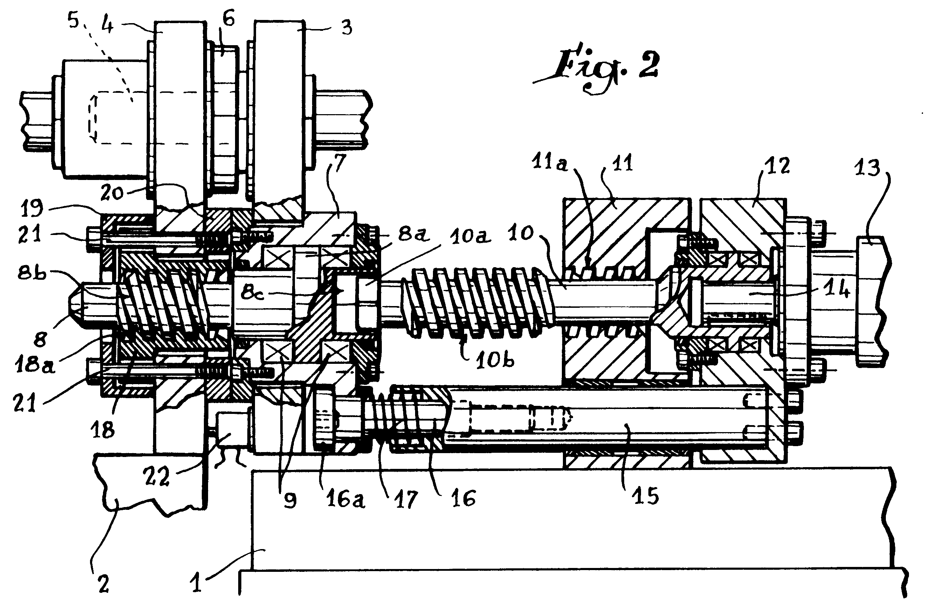

Dès lors le déplacement de la platine 3 en direction de la platine 4 est assuré par la coopération des organes filetés 8-8b et 18-18a, si bien que le moteur 13 supporte l'effort résistant résultant de l'emmanchement complet des éléments 5 dans les éléments 6, et ce jusqu'à la position accouplée illustrée en fig. 2.

L'arrêt automatique de l'alimentation du moteur 13 est opéré par le moyen d'un palpeur 22 porté par la face antérieure de la bague 7 de façon à être actionné par la platine 4 à la fin de l'accouplement.

Il va de soi que le filetage des parties 8b et 18a est de type irréversible, de telle sorte que ces parties filetées sont susceptibles de supporter les efforts de désaccouplement qui s'exercent sur les platines 3 et 4 après que le moteur 13 a été arrêté ; ces platines 3 et 4 ne peuvent donc se dissocier que moyennant une nouvelle alimentation dudit moteur après une inversion de son sens de rotation. Lors de la course de retour, les ressorts 17 interviennent à nouveau pour permettre l'engagement correct du filetage 10b dans le taraudage 11a.

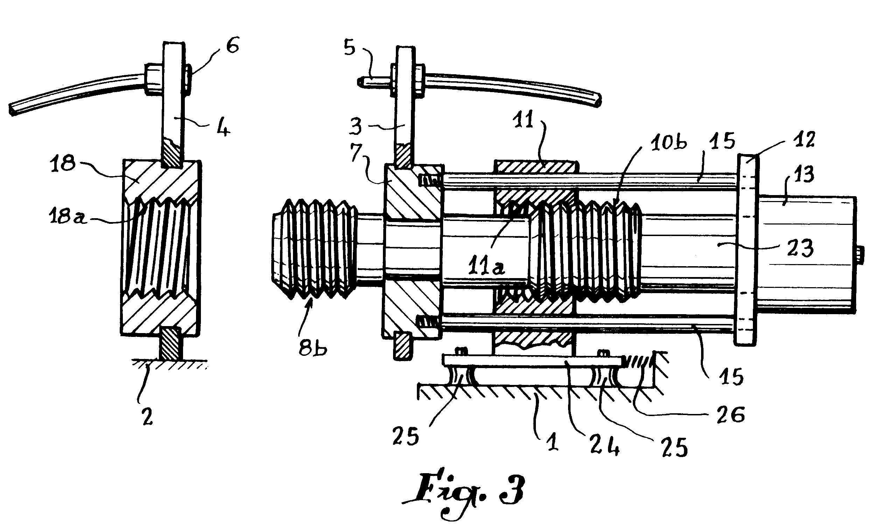

Fig. 3 illustre de manière très schématique une variante de construction du dispositif suivant l'invention. La bague 7 qui porte la platine 3 est ici reliée au châssis 12 par des guides 15 qui ne comportent aucune possibilité de déformation élastique, si bien que la partie filetée de vissage 8b destinée à coopérer avec l'écrou 18 et la partie filetée 10b qui est conjuguée avec le taraudage 11a du bâti 11 peuvent être portées par un même arbre rigide 23 entraîné par le moteur 13. Par contre, le bâti 11 est fixé à la pièce principale 1 par l'intermédiaire d'une semelle 24 susceptible de se déplacer élastiquement dans une direction parallèle à l'axe de l'arbre 23, de façon à permettre l'arrêt de l'avance de ce dernier jusqu'à coïncidence angulaire des filets des parties filetées.

Dans la forme de réalisation suivant fig. 3, on a supposé que la fixation élastique de la semelle 24 sur la pièce 1 était opérée à l'aide d'ensembles déformables 25 (Marque SILENTBLOC par exemple) associés à des ressorts longitudinaux 26, mais on comprend qu'on peut avoir recours à tout autre système élastique.

Il va de soi qu'un résultat identique serait obtenu en interposant un système déformable équivalent entre la platine 4 et l'écrou 18.

On conçoit en outre que les pièces 1 et 2 sont susceptibles d'être équipées d'un nombre tel de dispositifs d'accouplement suivant l'invention que ceux-ci assurent, non seulement l'accouplement et la retenue des platines 3 et 4 du raccord multiple, mais également le rapprochement à force et l'assemblage des pièces 1 et 2 elles-mêmes.

**Revendications**

1. Dispositif pour l'accouplement des platines porte-éléments des raccords multiples, du genre comportant deux organes filetés (8-8a et 18-18a) qui sont rendus respectivement solidaires de l'une et l'autre des platines (3 et 4) et dont l'un est animé d'un mouvement de rotation et d'avance afin de coopérer avec l'autre en assurant le rapprochement ou l'éloignement desdites platines, caractérisé en ce que à l'un au moins desdits organes sont associés des moyens élastiques (17 ou 25-26) propres à interrompre le mouvement d'avance jusqu'à engagement mutuel des filets desdits organes.

2. Dispositif suivant la revendication 1, caractérisé en ce que l'organe fileté qui est entraîné en rotation est constitué par une tige (8) qui est pourvue d'une partie filetée (8b) et qui est portée à rotation par une bague mobile (7) solidaire de la platine (3) correspondante, laquelle bague mobile est supportée par un bâti fixe (11) par l'intermédiaire de guides coulissants (15) qui assurent son assemblage avec un châssis (12) formant support pour le moteur (13) destiné à l'entraînement en rotation de la tige (8) précitée.

3. Dispositif suivant la revendication 2, caractérisé en ce que la tige tournante (8) est reliée à l'arbre de sortie (14) du moteur (13) par un arbre intermédiaire (10) pourvu d'une partie filetée (10b) qui coopère avec un taraudage (11a) du bâti (11) pour opérer le déplacement longitudinal ou avance de ladite tige avant que la partie filetée (8b) de celle-ci coopère avec l'autre organe fileté (18-18a).

4. Dispositif suivant la revendication 3, caractérisé en ce que la tige tournante (8) est liée angulairement à l'arbre intermédiaire (10) par un embout coulissant (10a) qui permet à ladite tige d'interrompre son avance tout en restant entraînée en rotation, tandis qu'aux guides (15) sont associés des moyens élastiques (16-17) autorisant l'arrêt de l'avance de la bague mobile (7) qui supporte la tige précitée.

5. Dispositif suivant la revendication 2, caractérisé en ce que les moyens élastiques (25-26) destinés à permettre l'interruption de l'avance de l'organe fileté tournant sont interposés entre le support de l'un des organes filetés et l'une (1) des deux pièces démontables (1 et 2) qui supportent le dispositif d'accouplement.

6. Dispositif suivant l'une quelconque des revendications 1 à 5, caractérisé en ce que le second organe fileté est constitué par un écrou (18) retenu angulairement et axialement sur la platine (4) correspondante.

7. Dispositif suivant la revendication 6, caractérisé en ce que l'écrou (18) est renfermé par une cage (19-20) à l'intérieur de laquelle il dispose d'un léger jeu d'orientation.


**Patentansprüche**

1. Vorrichtung zum Verhinden von Elementträgerplatten für Mehrfachverbindungen der Art, die zwei Gewindeelemente (8-8a und 18-18a) aufweist, die jeweils mit der einen und der anderen der platten (3 und 4) verbunden sind und von denen eines durch eine Dreh- und Vorwärtsbewegung bewegt wird, um mit dem anderen zusammenzuwirken, wodurch das Annähern und das Entfernen der Platten sichergestellt wird, dadurch gekennzeichnet, daß mit wenigstens einem der Elemente elastische Vorrichtungen (17 oder 25-26) verbunden sind, die geeignet sind, die Vorwärtsbewegung bis zum gegenseitigen Einrasten der Gewinde der Elemente zu unterbrechen.

2. Vorrichtung nach Ansprurh 1, dadurch gekennzeichnet, daß das Gewindelement, das in Drehung versetzt wird, aus einem Stab (8) besteht, der mit einem Gewindeteil (8b) versehen ist und der drehbar von einem beweglichen Ring (7) getragen wird, der mit der entsprechenden Platte verbunden ist, wobei die bewegliche Platte von einem festen Rahmen (11) mittels Gleitführungen (15) getragen wird, die seine Anordnung mit einem Gestell (12), das den Träger für den Motor (13), der zum in Bewegungversetzen des vorher erwähnten Stabes (8) bestimmt ist, bildet, sicherstellt.

3. Vorrichtung nach Anspruch 2, dadurch gekennzeichnet, daß der rotierende Stab (8) mit der Ausgangswelle (14) des Motors (13) über eine Zwischenwelle (10) verbunden ist, die mit einem Gewindeteil (10b) versehen ist, der mit einem Innengewinde (11a) der Rahmens (11) zusammenwirkt, um die longitudinale Bewegung oder die Vorwärtsbewegung des Stabes auszuführen, bevor der Gewindeteil (8b) desselben mit dem anderen Gewindeelement (18-18a) zusammenarbeitet.

4. Vorrichtung nach Anspruch 3, dadurch gekennzeichnet, daß der rotierende Stab (8) winkelmäßig über ein gleitendes Ansatzstück (10a) mit der Zwischenwelle (10) verbunden ist, welches dem Stab ermöglicht, seine Vorwärtsbewegung zu unterbrechen, wobei er in Drehung verbleibt, während mit den Führungen (15) elastische Vorrichtungen (16-17) verbunden sind, die das Anhalten der Vorwärtsbewegung des beweglichen Ringes (7), der den zuvor erwähnten Stab trägt, ermöglichen.

5. Vorrichtung nach Anspruch 2, dadurch gekennzeichnet, daß die elastischen Vorrichtungen (25-26), die dazu bestimmt, die Unterbrechung der Vorwärtsbewegung des sich drehenden Gewindeelements zu ermöglichen, zwischen dem Träger des einen der Gewindeelemente und dem einen (1) der beiden demontierbaren Teile (1 und 2), die die Verbindungsvorrichtung tragen, angeordnet sind.

6. Vorrichtung nach einem der Ansprüche 1 bis 5, dadurch gekennzeichnet, daß das zweite Gewindeelement von einer Mutter (18) gebildet wird, die winkelmäßig und axial auf der entsprechenden Platte (4) gehalten wird.

7. Vorrichtung nach Anspruch 6, dadurch gekennzeichnet, daß die Mutter (18) von einem Käfig (19-20) umschlossen wird, innerhalb dessen sie über ein leichtes Orientierungsspiel verfügt.

## Claims

1. A device for coupling element-bearing plates of multiple connectors, of the type comprising two threaded members (8-8a and 18-18a) which are made integral respectively with one and the other of the plates (3 and 4), and one of which is driven in a rotation and advance movement in order to cooperate with the other, ensuring the bringing-together or the distancing of said plates, characterised in that elastic means (17 or 25-26) suitable for interrupting the movement of advance until mutual engagement of the threads of said members are associated with at least one of said members.

2. A device according to Claim 1, characterised in that the threaded member which is driven in rotation is formed by a rod (8) which is provided with a threaded section (8b) and which is borne for rotation by a mobile ring (7) which is integral with the corresponding plate (3), which mobile ring is supported by a fixed frame (11) by means of sliding guides (15) which ensure the assembly thereof with a mounting (12) forming a support for the motor (13) for driving the afore-mentioned rod (8) in rotation.

3. A device according to Claim 2, characterised in that the rotating rod (8) is connected to the driven shaft (14) of the motor (13) by an intermediate shaft (10) provided with a threaded section (10b) which cooperates with an internal screw thread (11a) of the frame (11) to perform the longitudinal displacement or advance of said rod before the threaded section (8b) thereof cooperates with the other threaded member (18-18a).

4. A device according to Claim 3, characterised in that the rotating rod (8) is connected angularly to the intermediate shaft (10) by means of a sliding joining piece (10a) which enables said rod to interrupt its advance while continuing to be driven in rotation, while elastic means (16-17) permitting the stopping of the advance of the mobile ring (7) which supports the afore-mentioned rod are associated with the guides (15).

5. A device according to Claim 2, characterised in that the elastic means (25-26) for permitting the interruption of the advance of the rotating threaded member are interposed between the support of one of the threaded members and one (1) of the two dismountable parts (1 and 2) which support the coupling device.

6. A device according to any one of Claims 1 to 5, characterised in that the second threaded member is formed by a nut (18) held angularly and axially on the corresponding plate (4).

7. A device according to Claim 6, characterised in that the nut (18) is enclosed by a cage (19-20) inside which it has a slight orientating play.

Fig. 1

*Fig. 2*

EP 0 360 711 B1

Fig. 3